# EUROPEAN PATENT APPLICATION

(11) **EP 3 812 434 A1**
(43) Date of publication of application: **28.04.2021**
(21) Application number: 19822628.4
(22) Date of filing: 09.05.2019
(51) Int. Cl.: C09D 201/04, C09D 133/00, C09D 183/00, C09D 183/04

(54) **SLIP AGENT AND ARTICLE COATED WITH COATING FILM FORMED THEREFROM**

(30) Priority: 19.06.2018 JP 2018116398
(71) Applicant: Daiwa Can Company, Tokyo 100-7009 (JP)
(72) Inventor: MATUKAWA, Yosihiko, Sagamihara-shi, Kanagawa 252-5183 (JP)
(74) Representative: Henkel & Partner mbB
(86) International application number: PCT/JP2019/018532
(87) International publication number: WO 2019/244498

(57) **Abstract**

A sliding agent includes: a graft polymer obtained by copolymerizing an organic solvent-soluble fluoropolymer having radical polymerizability, a one-terminal radical-polymerizable polysiloxane, and a non-reactive radical-polymerizable methacrylate-based monomer; a one-terminal reactive silicone oil; a hardener; and an organic solvent, and the sliding agent can improve transparency of coating film formed from the sliding agent and durability that can withstand a long-term use, while excellent sliding property of the coating film is maintained.

## Description

### RELATED APPLICATIONS

This application claims the priority of Japanese Patent Application No. 2018-116398 filed on June 19, 2018, the disclosure of which is incorporated herein by reference in its entirety.

### FIELD OF THE INVENTION

The present invention relates to a sliding agent employed for forming a coating film having liquid droplet removing property (sliding property such as water-sliding property, oil-sliding property, etc.) and a coating film obtained by this sliding agent.

### BACKGROUND OF THE INVENTION

It is very important to make water or oil on a solid surface slide down at a slight angle. Such solid surface can be prevented from not only becoming wet with water or oil, but also becoming dirty by adhering dusts in the air to the water or oil.

Moreover, in transparent glasses, transparency of the glasses is lost by adhesion of water droplets. For example, in window glasses of cars, visibility is deteriorated by the adhered water droplets.

Patent Literature 1 discloses a sliding agent applied to kitchen drains that forms a conventional coating film having a good sliding property. The kitchen drain applied with this sliding agent can make water or oil of food slide down, and can prevent sliminess due to propagation of bacteria caused when drains are left with dirt such as water or oil components adhered to the kitchen drain.

### CITATION LIST

### PATENT LITERATURE

PATENT LITERATURE 1: Japanese Patent No. 5486157 B

### DISCLOSURE OF THE INVENTION

### PROBLEM TO BE SOLVED BY THE INVENTION

However, transparent coating films cannot be formed with the sliding agent of Patent Literature 1. Although a high transparency is not necessary for kitchen drains, when the substrate to which the sliding agent is applied is a glass, its value will deteriorate if the coating film is not transparent, and it is not suitable for window glasses of cars and the like.

When use for a long term is considered, durability of the coating film becomes necessary. However, durability of the coating film formed by the sliding agent of Patent Literature 1 is low, and it is not suitable for applications that require a long-term durability.

The present invention has been accomplished in view of the above-mentioned problems, and an object thereof is to provide a sliding agent capable of improving transparency of a coating film and improving durability that can withstand a long-term use, while excellent sliding property is maintained. Moreover, the object of the present invention is to provide an article having a coating film formed by the sliding agent.

### MEANS TO SOLVE THE PROBLEM

The sliding agent of the present invention comprises: a graft polymer obtained by copolymerizing an organic solvent-soluble fluoropolymer having radical polymerizability, a one-terminal radical-polymerizable polysiloxane, and a non-reactive radical-polymerizable methacrylate-based monomer; a one-terminal reactive silicone oil; a hardener; and an organic solvent.

The one-terminal reactive silicone oil is preferably 1 to 10 parts by mass relative to 100 parts by mass of the graft polymer. Moreover, among all organic solvents comprised in the sliding agent, the proportion of a non-polar solvent having a relative permittivity of 3 or less is preferably 10% by volume or greater.

The article according to the present invention is coated with a coating film formed by the sliding agent on its surface. The thickness of the coating film is preferably 3 to 20 µm. Moreover, the difference between a haze value of a substrate alone before application of the sliding agent and a haze value of the substrate after application of the sliding agent is preferably 0.1 to 1%. Furthermore, a ultra micro indentation hardness is preferably 0.15 GPa or less when a maximum indentation load on the coating film is 1 mN.

When sliding angles of 10 µL water are measured before and after an abrasion treatment for the surface of the coating film, the difference between the sliding angles before and after the abrasion treatment is preferably 30 degrees or less. The abrasion treatment is a treatment of reciprocating a non-woven fabric along the surface of the coating film for 1000 times under a condition of a load: 250 g/cm², a moving distance: 20 mm, and a moving velocity: 600 mm/min,

As the article according to the present invention, a substrate coated with the coating film is preferably a transparent glass, and examples thereof include solar panels, window glasses, traffic mirrors, glasses for agricultural houses, glasses for outdoor signboards and glass bottles.

### EFFECT OF THE INVENTION

By using the sliding agent of the present invention, a coating film that is transparent and has a durability capable of a long-term use while excellent sliding property is maintained can be formed.

### BEST MODE FOR CARRYING OUT THE INVENTION

Hereinbelow, embodiments are described. The sliding agent of the present embodiment includes: (1) a graft polymer that is a base resin; (2) a silicone oil as an additive; (3) a hardener for crosslinking the base resin; and (4) an organic solvent.
(1) As the graft polymer, a graft polymer obtained by copolymerizing (a) an organic solvent-soluble fluoropolymer having radical polymerizability, (b) a one-terminal radical-polymerizable polysiloxane, and (c) a non-reactive radical-polymerizable methacrylate-based monomer is used.
(2) As the silicone oil to be added, a silicone oil of which either of its terminals is a reactive organic functional group is used. The amount of the silicone oil added is 1 to 10 parts by mass relative to 100 parts by mass of the graft polymer obtained by copolymerizing the organic solvent-soluble fluoropolymer having radical polymerizability, the one-terminal radical-polymerizable polysiloxane, and the non-reactive radical-polymerizable methacrylate-based monomer. If it is less than 1 parts by mass, the sliding property is insufficient. If it is greater than 10 parts by mass, the sliding property does not improve, and thus it is a waste of cost.
(3) As the hardener for crosslinking the base resin, a hardener that softens the coating film after hardening process is used. Unlike metals, resins are difficult to be worn away when they are softer; that is, the softer the resin is, the higher the abrasion resistance is. If such hardener is used, a survival rate of the coating film increases, and thus the product coated with the coating film can be used for a long term. It is effective in increasing durability as the coating film. As the hardness of the hardened coating film, the ultra micro indentation hardness is preferably 0.15 GPa or less, and more preferably 0.13 GPa or less when the maximum indentation load of the coating film is 1 mN.
   With respect to the abrasion resistance, one that has the difference between the sliding angles of 10 µL water before and after an abrasion treatment is 30 degrees or less is suitable; the abrasion treatment is a treatment of reciprocating a non-woven fabric along the surface of the coating film for 1000 times under a condition of a load: 250 g/cm, a moving distance: 20 mm, and a moving velocity: 600 mm/min. If the difference between the sliding angles of 10 µL water before and after the above-described abrasion treatment of 1000 times exceed 30 degrees, the sliding property is significantly deteriorated over time, and thus cannot withstand a long-term use.
(4) As the solvent to dissolve the above-described resins, an organic solvent of low polarity is used. Dissolving a solute sufficiently is an important object of a solvent; however, a solvent suitable for a solute needs to be used in order to achieve sufficient dissolving. In the present embodiment, the proportion of the non-polar solvent having a relative permittivity of 3 or less among all organic solvents comprised in the sliding agent is 10% by volume or greater, so that its object can be achieved and the coating film can be transparentized. With respect to the transparency of the coating film, the difference between a haze value of the substrate alone before application of the sliding agent and a haze value after application of the sliding agent becomes 0.1 to 1.0% by using the above-identified solvent, and thus product development to applications that require transparency becomes possible.

The sliding agent of the present embodiment is applied to the substrate, and then dried by heating. A thickness of a coating film produced thereby is 3 to 20 µm. If the thickness of the coating film is less than 3 µm, the coating film will be worn away over a long-term use because of its thinness when the coating film is soft. Whereas, if it is 20 µm or greater, the film thickness will be excessive for more than the number of years that is actually used, and thus it will be a waste of cost.

Objects to which the coating film of the present embodiment is formed are preferably glass substrates that can take advantage of the transparency of the coating film. Examples of specific applications include window glasses of cars, buildings and houses, solar panels, traffic mirrors, glasses for agricultural houses, glasses for outdoor signboards, glass bottles and the like.

### [EXAMPLE 1]

Hereinbelow, the present invention will be described based on examples; however, the present invention is not limited to the contents of these examples.

Table 1 is a formulation table of the sliding agent used for each specimen.

**[Table 1]**

| | **Base resin** | **One-terminal reactive silicone oil** | **Hardener** | **Organic solvent** | **Film thickness (µm)** |
|---|---|---|---|---|---|
| **Example 1** | **100 pts. mass** | **7 pts. mass** | **Hexamethylene diisocyanate 50 pts. mass** | **Aromatic hydrocarbon solvent 38 pts. mass** | **8.7** |
| **Comparative example 1** | **100 pts. mass** | **None** | **Hexamethylene diisocyanate 50 pts. mass** | **Aromatic hydrocarbon solvent 38 pts. mass** | **8.3** |
| **Comparative example 2** | **100 pts. mass** | **7 pts. mass** | **Hexamethylene diisocyanate 32 pts. mass** | **Butyl acetate 100 pts. mass** | **10.1** |
| **Comparative example 3** | **100 pts. mass** | **7 pts. mass** | **Hexamethylene diisocyanate 50 pts. mass** | **Aromatic hydrocarbon solvent 38 pts. mass** | **2.6** |
| **Comparative example 4** | **100 pts. mass** | **7 pts. Mass** | **Melamine resin 38 pts. Mass** | **Butyl acetate 100 pts. mass** | **8.0** |

### <Example 1>

In Example 1, the graft polymer obtained by copolymerizing the organic-solvent soluble fluorocarbon polymer having radical polymerizability, the one-terminal radical-polymerizable polysiloxane, and the non-reactive radical-polymerizable methacrylate-based monomer was used as the base resin, the one-terminal reactive silicone oil was used as the silicone oil, and hexamethylene diisocyanate was used as the hardener.

Moreover, other than the organic solvents included in the base resin and the hardener, an aromatic hydrocarbon solvent (relative permittivity: 1.8; boiling point: 150°C or higher) was used as the organic solvent, and the sliding agent comprising 100 parts by mass of the base resin, 7 parts by mass of the silicone oil, 50 parts by mass of the hardener, and 38 parts by mass of the organic solvent was produced.

This sliding agent was applied to a stainless substrate by a wire bar No. 18 and subjected to a dry heating treatment at 200°C for one hour to produce the coating film.

The organic solvents included in the sliding agent of Example 1 are shown in Table 2.

**[Table 2]**

| **Organic solvent** | **Relative permittivity** | **Parts by mass** | **Specific gravity** | **Volume** | **Mixed volume ratio** |
|---|---|---|---|---|---|
| **Butyl acetate** | **5.0** | **41.3** | **0.88** | **46.8** | **35.8** |
| **n-Butanol** | **17.5** | **6.2** | **0.81** | **7.7** | **5.9** |
| **IPA** | **19.9** | **2.8** | **0.79** | **3.5** | **2.7** |
| **Methanol** | **32.7** | **1.6** | **0.79** | **2.0** | **1.5** |
| **Aromatic hydrocarbon** | **1.8** | **38.0** | **0.87** | **43.7** | **33.4** |
| **Xylene** | **2.3** | **23.2** | **0.86** | **27.0** | **20.6** |

Accordingly, among all organic solvents included in the sliding agent of Example 1, those that had a relative permittivity of 3 or less were aromatic hydrocarbon and xylene, and the total thereof was 54.0% in the mixed volume ratio.

### <Comparative example 1>

As Comparative example 1, sliding agents and coating films were produced similarly to Example 1 except that the silicone oil was not added. The organic solvents included in the sliding agent of Comparative example 1 are shown in Table 3. Since the silicone oil does not contain volatile components, the condition of the organic solvents is the same as in Example 1.

**[Table 3]**

| **Organic solvent** | **Relative permittivity** | **Parts by mass** | **Specific gravity** | **Volume** | **Mixed volume ratio** |
|---|---|---|---|---|---|
| **Butyl acetate** | **5.0** | **41.3** | **0.88** | **46.8** | **35.8** |
| **n-Butanol** | **17.5** | **6.2** | **0.81** | **7.7** | **5.9** |
| **IPA** | **19.9** | **2.8** | **0.79** | **3.5** | **2.7** |
| **Methanol** | **32.7** | **1.6** | **0.79** | **2.0** | **1.5** |
| **Aromatic hydrocarbon** | **1.8** | **38.0** | **0.87** | **43.7** | **33.4** |
| **Xylene** | **2.3** | **23.2** | **0.86** | **27.0** | **20.6** |

Accordingly, among all organic solvents included in the sliding agents of Comparative example 1, those that had the relative permittivity of 3 or less were aromatic hydrocarbon and xylene, and the total thereof was 54.0% in the mixed volume ratio.

### <Comparative example 2>

As Comparative example 2, sliding agents and coatings film were produced similarly to Example 1 except that 100 parts by mass of butyl acetate was used as the organic solvent. The organic solvents included in the sliding agent of Comparative example 2 are shown in Table 4.

**[Table 4]**

| **Organic solvent** | **Relative permittivity** | **Parts by mass** | **Specific gravity** | **Volume** | **Mixed volume ratio** |
|---|---|---|---|---|---|
| **Butyl acetate** | **5.0** | **149.3** | **0.88** | **169.4** | **91.2** |
| **IPA** | **19.9** | **2.8** | **0.79** | **3.5** | **1.9** |
| **Xylene** | **2.3** | **11.0** | **0.86** | **12.8** | **6.9** |

Accordingly, among all organic solvents included in the sliding agents of Comparative example 2, one that had the relative permittivity of 3 or less was xylene, and the value thereof was 6.9% in mixed volume ratio.

### <Comparative example 3>

As Comparative example 3, sliding agents and coating films were prepared similarly to Example 1 except that the wire bar No. 4 was used. The organic solvents included in the sliding agents of Comparative example 3 are the same as in Example 1.

### <Comparative example 4>

As Comparative example 4, sliding agents and coating films were prepared similarly to Example 1 except that 38 parts by mass of melamine resin was used as the hardener and 100 parts by mass of butyl acetate was used as the organic solvent. The organic solvents included in the sliding agents of Comparative example 4 are shown in Table 5.

**[Table 5]**

| **Organic solvent** | **Relative permittivity** | **Parts by mass** | **Specific gravity** | **Volume** | **Mixed volume ratio** |
|---|---|---|---|---|---|
| **Butyl acetate** | **5.0** | **141.3** | **0.88** | **160.3** | **82.2** |
| **n-Butanol** | **17.5** | **10.5** | **0.81** | **13.0** | **6.6** |
| **IPA** | **19.9** | **2.8** | **0.79** | **3.5** | **1.8** |
| **Methanol** | **32.7** | **1.5** | **0.79** | **1.9** | **1.0** |
| **Xylene** | **2.3** | **14.0** | **0.86** | **16.3** | **8.3** |

Accordingly, among all organic solvents comprised in the sliding agents of Comparative example 4, one that had the relative permittivity of 3 or less was xylene, and the value thereof was 8.3% in mixed volume ratio.

### <Evaluation items>

The coating films were respectively evaluated on the following items.

Sliding angle of water: 10 µL of pure water was put onto the coating film, and the substrate was tilted to measure the angle when pure water slid. When pure water did not slide at inclination of 90 degrees, it was determined as "x".

Sliding angle of oil: 10 µL of an oleic acid was put onto the coating film, and the substrate was tilted to measure the angle when the oleic acid slid. When the oleic acid did not slide at inclination of 90 degrees, it was determined as "x".

Transparency of the coating film: The coating film was visually observed, and it was determined as "transparent" when the substrate could be observed, and "not transparent" when the substrate could not be observed.

Abrasion test: 1 cm × 1 cm of a non-woven fabric was adhered to a planar indenter of a metal plate. Next, the non-woven fabric was superimposed onto the coating film of the specimen, and the surface of the coating film was abrased by the non-woven fabric with a load of 250 g. Specifically, the non-woven fabric of the metal plate was reciprocated along the surface of the coating film for 1000 times under the condition of a moving distance: 20 mm and a moving velocity: 600 mm/min.

Hardness: A ultra micro indentation hardness test was performed. Specifically, a hardness (in accordance with JIS Z 2255) of when the indenter was indented to the coating film with the following condition was measured.

Maximum indentation load: 1mN
Indenter: Berkovich indenter (diamond, an apex angle of 115°)
Loading time: 30 seconds
Retaining time: 10 seconds

The evaluation results of them are shown in Table 6.

**[Table 6]**

| | **Sliding angle of water (degrees)** | | | **Sliding angle of oil** | **Hardness (Gpa)** | | **Transparency** |
|---|---|---|---|---|---|---|---|
| | **Initial** | **After 1000 times of abrasion test** | **Difference between initial value and after 1000 times of abrasion test** | **Initial** | **Initial** | **After 1000 times of abrasion test** | **Visual observation** |
| **Example 1** | **29.5** | **48.8** | **19.3** | **13.5** | **0.113** | **0.117** | **Transparent** |
| **Comparative example 1** | **28.2** | **64.8** | **36.6** | **-** | **0.169** | **0.163** | **Transparent** |
| **Comparative example 2** | **21.2** | **55.0** | **33.8** | **14.0** | **0.158** | **0.158** | **Not transparent** |
| **Comparative example 3** | **31.3** | **x** | **-** | **-** | **-** | **-** | **Transparent** |
| **Comparative example 4** | **29.7** | **-** | **-** | **12.2** | **-** | **-** | **Not transparent** |

### <Example 2>

In Example 2, it was produced similarly to Example 1 other than a transparent glass was used as the substrate to which the sliding agent was applied.

### <Comparative example 5>

In Comparative example 5, the transparent glass substrate alone to which the sliding agent was not applied was used.

### <Evaluation items>

Each coating film was evaluated on the sliding angle of water and the sliding angle of oil similarly to Example 1.

Transparency of the coating film: A turbidity (haze value) of the coating film was measured with a haze meter "NDH 5000" (manufactured by NIPPON DENSHOKU INDUSTRIES CO., LTD.).

The evaluation results of them are shown in Table 7.

**[Table 7]**

| | **Sliding angle of water (degrees)** | **Sliding angle of oil (degrees)** | **Transparency haze (%)** |
|---|---|---|---|
| **Example 2** | **30.1** | **17.5** | **0.33** |
| **Comparative example 5** | **x** | **x** | **0.29** |

The evaluation results of Table 6 shows that, in Example 1, the coating film was transparent, the sliding angle of water was initially 29.5 degrees, the sliding angle after 1000 times of the abrasion test was 48.8 degrees, the difference between before and after the test was 19.3 degrees, and thus the abrasion property was good.

Since the silicone oil was not added in Comparative example 1, the sliding angle of water was initially 28.2 degrees and became 64.8 degrees after 1000 times of the abrasion test, the difference before and after the test was 36.6 degrees, and thus the abrasion property was poor.

Since butyl acetate was used as the organic solvent in Comparative example 2, the mixed volume ratio of the organic solvent having the relative permittivity of 3 or less among all organic solvents comprised in the sliding agent became low, 6.9%, and thus the coating film was not transparent. Hardness was harder than Example 1, the abrasion property was low, and it was easily worn away.

Since the film thickness was thin, 2.6 µm, in Comparative example 3, the sliding property of water deteriorated such that water did not fall down even at 90 degrees inclination after 1000 times of the abrasion test.

Since melamine resin was used as the hardener and butyl acetate was used as the organic solvent in Comparative example 4, the mixed volume ratio of the organic solvent having the relative permittivity of 3 or less among all organic solvents comprised in the sliding agent was low, 8.3%, and thus the coating film was not transparent.

As stated above, it was found that the coating film of Example 1 is transparent, has a good sliding angle, is soft, and can withstand a long-term use.

Moreover, the evaluation results of Table 7 shows that Example 2 of which the sliding agent was applied to a glass achieved the sliding angle of water of 30.1 degrees and the sliding angle of oil of 17.5 degrees. In Comparative example 5, which is the substrate alone not applied with the sliding agent, the results of the sliding angles of water and oil were both "x (did not fall down at 90 degrees inclination)". Therefore, the result of Example 2 may be regarded as a better result. Moreover, the result of measuring transparency with the haze meter was 0.29% in the glass substrate alone, and 0.33% in those that the sliding agent was applied thereto. The difference between the haze value of the glass substrate alone before the sliding agent was applied and the haze value after the sliding agent was applied was 0.04%. From these results, it was found that the transparency almost the same as that of the glass substrate alone could be achieved.

### INDUSTRIAL APPLICABILITY

The sliding agent of the present invention can be applied as materials for providing sliding property to articles in various industrial fields such as solar panels, window glasses, traffic mirrors, glasses for agricultural houses, glasses for outdoor signboards, and glass bottles, and can form a coating film that is transparent and has durability that can be used for a long term, while excellent sliding property is maintained.

## Claims

1. A sliding agent comprising:
a graft polymer obtained by copolymerizing an organic solvent-soluble fluoropolymer having radical polymerizability, a one-terminal radical-polymerizable polysiloxane, and a non-reactive radical-polymerizable methacrylate-based monomer;
a one-terminal reactive silicone oil;
a hardener; and
an organic solvent.

2. The sliding agent according to claim 1, wherein the one-terminal reactive silicone oil is 1 to 10 parts by mass relative to 100 parts by mass of the graft polymer.

3. The sliding agent according to claim 1 or 2, wherein, among all organic solvents comprised in the sliding agent, the proportion of a non-polar solvent having a relative permittivity of 3 or less is 10% by volume or greater.

4. An article having a coating film formed by the sliding agent according to any one of claims 1 to 3 on its surface.

5. The article according to claim 4, wherein the thickness of the coating film is 3 to 20 µm.

6. The article according to claim 4 or 5, wherein the difference between a haze value of a substrate alone before application of the sliding agent and a haze value of the substrate after application of the sliding agent is 0.1 to 1%.

7. The article according to any one of claims 4 to 6, wherein a ultra micro indentation hardness is 0.15 GPa or less when a maximum indentation load on the coating film is 1 mN.

8. The article according to any one of claims 4 to 7, wherein, when sliding angles of 10 µL water are measured before and after an abrasion treatment, which is a treatment of reciprocating a non-woven fabric along the surface of the coating film for 1000 times under a condition of a load: 250 g/cm², a moving distance: 20 mm, and a moving velocity: 600 mm/min, the difference between the sliding angles before and after the abrasion treatment is 30 degrees or less.

9. The article according to any one of claims 4 to 8, wherein the substrate coated with the coating film is a transparent glass.

10. The article according to any one of claims 4 to 9, wherein the article coated with the coating film is any one of solar panels, window glasses, traffic mirrors, glasses for agricultural houses, glasses for outdoor signboards and glass bottles.
